# EUROPÄISCHE PATENTSCHRIFT

(11) **EP 1 500 841 B1**
(45) Veröffentlichungstag und Bekanntmachung des Hinweises auf die Patenterteilung: **09.12.2009**
(21) Anmeldenummer: 04025984.8
(22) Anmeldetag: 23.10.1997
(51) Int. Cl.: F16D 65/12

(54) **Verfahren zur Herstellung einer Bremsscheibe, insbesondere als Achs- oder Radbremsscheibe für Schienenfahrzeuge**
Method of manufacturing a brake disc, particularly a shaft or wheel brake disc for railway vehicles
Procédé de fabrication d'un disque de frein, en particulier d'un disque de frein d'arbre ou de roue pour véhicules de chemin de fer

(30) Priorität: 03.12.1996 DE 19650056
(43) Veröffentlichungstag der Anmeldung: 26.01.2005
(62) Teilanmeldung aus: 97118410.6
(73) Patentinhaber: Faiveley Transport Remscheid GmbH, 42859 Remscheid (DE)
(72) Erfinder: Engels, Albrecht Dr., 42859 Remscheid (DE); Ruppert, Helmut, 42857 Remscheid (DE); Zeuner, Thomas Dr., 31137 Hildesheim (DE); Stojanov, Pejo, Dr. c/o Counter Pressure Casting, Lake Forest CA 92630 (US)
(74) Vertreter: Gerbaulet, Hannes

(56) Entgegenhaltungen:
- WO-A-95/01519
- WO-A-95/09251
- WO-A-95/12468
- DE-C- 19 504 949
- US-A- 5 259 437
- US-A- 5 325 941
- US-A- 5 429 173

## Beschreibung

Die Erfindung betrifft ein Verfahren zur Herstellung einer Bremsscheibe, insbesondere als Achs- oder Radbremsscheibe für Schienenfahrzeuge, mit einem aus einem Leichtmetall oder einer Leichtmetall-Legierung in einer Gießform (1) gegossenen Tragkörper, der ein- oder beidseitig eine ringförmige Schicht (11, 12) aus einem Keramikwerkstoff aufweist, die eine Reibfläche für eine Bremsbacke bildet, wobei aus dem Material der ringförmigen Schicht eine Einlage vorgefertigt wird, wobei als Trägermaterial eine duktile Al-Legierung verwendet wird, und als Schichtmaterial eine AlSi-Legierung mit partikelförmigen Verstärkungseinlagerungen oder eine übereutektische AlSi-Legierung verwendet werden.

Bremsscheiben sind in verschiedenen Ausführungen bekannt, sie können aus einem einteiligen Bauteil einschließlich Nabe bestehen oder aus einem Ringkörper, der an einer Nabe befestigt wird. Dabei ist der Tragkörper mit der die Reibfläche bildenden Schicht als Monoblockscheibe ausgebildet (DE 44 00 898 C1).

Zur Herstellung von Bremsscheiben ist es bekannt (DE 42 08 930 A1), auf einem durch Druckgießen oder Formpressen hergestellten Tragkörper Keramikpulvermaterialien, gegebenenfalls als vorgeformte Einlage, aufzubringen und diese bei hohem Druck und hoher Temperatur zur Bildung der die Reibfläche aufweisenden Schicht mit dem Tragkörper zu verbinden.

Bei dem in der EP 0 912 277 B1 beschriebenen Verfahren zur Herstellung einer Bremsscheibe, insbesondere als Achs- oder Radbremsscheibe für Schienenfahrzeuge, mit einem aus einem Leichtmetall oder einer Leichtmetall-Legierung in einer Gießform gegossenen Tragkörper, der ein- oder beidseitig eine ringförmige Schicht aus einem Metall-Keramik-Verbundstoff aufweist, die eine Reibfläche für eine Bremsbacke bildet, werden die Schmelze des Tragkörpermaterials und die Schmelze des Schichtmaterials zeitversetzt in der Gießform aufeinander gegossen.

Die WO 95/01519 beschreibt ein Verfahren zur Herstellung einer Bremsscheibe mit einem aus Legierung in einer Gießform gegossenen Rotorkörper, der einen ringförmigen Rotoreinsatz aufweist, wobei der Rotoreinsatz aus einem Paar beabstandeter Bremsscheiben und einer Anzahl Abstandselemente besteht. Der Rotoreinsatz wird aus einem Metallmatrixverbund gegossen und dann in einer Rotorform platziert, wobei vorgesehen werden kann, den Rotoreinsatz bis zu einer bestimmten Temperatur vorzuwärmen oder mit einem vorgewählten Material zu beschichten, um den metallurgischen Verbindungsvorgang zwischen Rotoreinsatz und Rotorkörper zu unterstützen. Spezielle Maßnahmen sind nicht vorgesehen.

Die DE 196 26 175 A1 beschreibt ein Verfahren zur Herstellung einer Bremsscheibe mit einem aus einem Leichtmetall oder einer Leichtmetall-Legierung in einer Gießform gegossenen Tragkörper, der ein- oder beidseitig eine ringförmige Schicht aus einem Metall-Keramik-Verbundwerkstoff aufweist, die eine Reibfläche für eine Bremsbacke bildet, bei dem die Schmelze des Tragkörpermaterials und die Schmelze des Schichtmaterials zeitversetzt in die Gießform aufeinander gegossen werden.

Aufgabe der Erfindung ist es, die Herstellung von Bremsscheiben zu vereinfachen.

Diese Aufgabe wird mit einem Verfahren mit den im Anspruch angegebenen Merkmalen gelöst.

Wenn aus dem Material der ringförmigen Schicht eine Einlage vorgefertigt wird, die erfindungsgemäß in die Gießform eingelegt und dann mit der Schmelze des Tragkörpermaterials umgossen wird, wobei wenigstens die mit der Schmelze des Tragkörpers in Berührung kommenden Bereiche der Einlage so erwärmt werden, wird im Übergangsbereich beider Materialien ein Gradientengefüge gebildet. Dabei werden die Einlagen auf eine Temperatur zwischen 100°C und der Liquidus-Temperatur, Bereiche der Einlagen erfindungsgemäß auf eine Temperatur zwischen 200 und 500°C, erwärmt .

Der Wärmefluss von der Schmelze zur Einlage und damit die Gefügebildung wird verbessert, dadurch dass erfindungsgemäss die Oberfläche der Einlage zumindest bereichsweise mit Vorsprüngen und/oder Ausnehmungen versehen wird.

Eine Verbesserung wird auch erreicht, dadurch dass erfindungsgemäss die Oberfläche der Einlage zumindest bereichsweise mit einer Beschichtung versehen wird, die bei Kontakt mit der Schmelze des Tragkörpers eine exotherme Reaktion hervorruft und/oder das Benutzungsverhalten verbessert. Das gilt insbesondere für eine Nickelbeschichtung, denn Nickel reagiert ab 300°C mit Aluminium exotherm.

Erfindungsgemäss werden die Schmelzen im Sandgieß-, Niederdruck-, Gegendruck- oder Vakuumverfahren oder einer Kombination dieser Gießverfahren vergossen. Ansserdem werden die gegossenen Bremsscheiben anschließend einer Wärmebehandlung unterzogen.

Als Schichtmaterial wird eine AlSi-Legierung mit partikelförmigen Verstärkungseinlagerungen oder eine übereutektische AlSi-Legierung verwendet. Erfindungsgemäss werden die Einlagen aus einer mit einer entsprechenden Leichtmetall-Legierung gefüllten, offenporigen Schaumkeramik oder aus mit einer Leichtmetall-Legierung gefüllten Metallschäumen hergestellt. Als Trägerkörpermaterial wird eine duktile Al-Legierung verwendet.

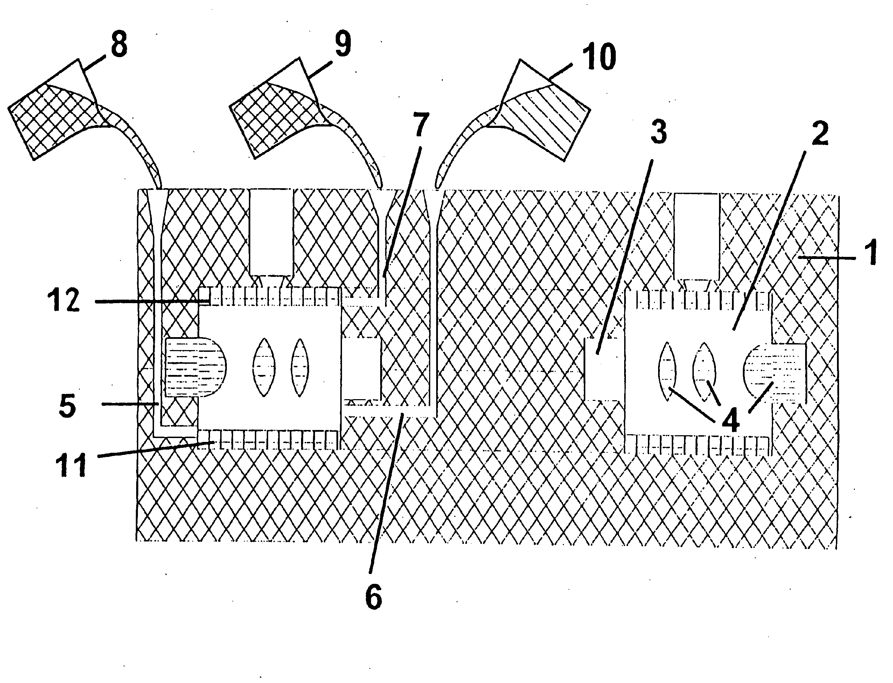

Im folgenden wird ein in der Zeichnung dargestelltes Ausführungsbeispiel der Erfindung erläutert; die einzige Figur zeigt schematisch einen Schnitt durch eine zweiteilige Gießform zur Herstellung von Bremsscheiben.

In der Gießform 1 ist ein kreisringförmiger Formhohlraum gebildet mit einem größeren Hohlraum 2 für den Tragkörper und einem kleineren Hohlraum 3 für den Befestigungsnocken der Bremsscheibe. Im größeren Hohlraum 2 des Formhohlraums sind Kerne 4 angeordnet, die zur Ausbildung von Kühlrippen an den Bremsscheiben dienen.

Bei der dargestellten Ausführung führen zum größeren Hohlraum 2 drei Gießsysteme 5, 6, 7, bestehend jeweils aus Einguss, Lauf und Anschnitt, denen jeweils Gießpfannen 8, 9, 10 zugeordnet sind. Die Anschnitte der Gießsysteme 5, 6, 7 münden, wie dargestellt, in unterschiedlichen Höhen in den größeren Hohlraum 2. Die beiden Gießpfannen 8, 9 enthalten eine Schmelze einer partikelverstärkten AlSi-Legierung (z. B. Duralcan) als Schichtmaterial, während die Gießpfanne 10 eine Schmelze aus einer duktilen Al-Legierung (z. B. Legierung A 356) für das Tragkörpermaterial enthält.

Zur Herstellung einer Bremsscheibe mit einem Tragkörper, der beidseitig eine ringförmige Schicht 11/12 aus einem Keramikwerkstoff aufweist, die eine Reibfläche für eine Bremsbacke bildet, wird zunächst die Schmelze aus der Gießpfanne 8 in den Hohlraum 2 gegossen, bis sich auf dem Boden des Formhohlraums eine hinreichend dicke Schicht 11 gebildet hat. Die Schmelze wird auf eine Temperatur zwischen der Gießtemperatur und 100°C oder Raumtemperatur abgekühlt. Dann wird aus der Gießpfanne 10 die Schmelze des Trägermaterials in den Hohlraum 2 eingegossen, wobei auch der kleinere Hohlraum 3 des Formhohlraums ausgefüllt wird. Die Schmelze aus der Gießpfanne 10 wird bis zu einem derartigen Niveau in den Formhohlraum eingefüllt, dass bis zur Oberseite des Formhohlraums ein Abstand verbleibt, der der gewünschten Dicke der die Reibfläche bildenden Schicht 12 auf der anderen Seite der Bremsscheibe entspricht. Auch die Schmelze des Tragkörpermaterials aus der Gießpfanne 10 wird abgekühlt, bis sie zumindest im Bereich ihrer freien Oberfläche eine Temperatur zwischen der Gießtemperatur und 100°C oder Raumtemperatur erreicht hat. Dann wird schließlich das Schichtmaterial aus der Gießpfanne 9 in den Formhohlraum zur Bildung der anderen Schicht 12 eingegossen. In den Übergangsbereichen der beiden unterschiedlichen Materialien für den Tragkörper einerseits und die Schichten andererseits bildet sich ein Gradientengefüge mit einem hinreichenden Verbund zwischen den Materialien aus. Die aus der Gießform 1 entnommenen Bremsscheiben können anschließend einer Wärmebehandlung unterzogen werden.

Nach dem erfindungsgemäßen, im einzelnen nicht dargestellten Verfahren, wird aus dem Material der die Reibfläche bildenden Schicht eine Einlage vorgefertigt, die in die Gießform eingelegt und dann mit der Schmelze des Tragkörpermaterials umgossen wird.

### Bezugszeichenliste

(1) Gießform
(2) Hohlraum für den Tragkörper
(3) Hohlraum für den Befestigungsnocken
(4) Kern
(5) Gießsystem, bestehen aus Einguss, Lauf und Anschnitt
(6) Gießsystem, bestehen aus Einguss, Lauf und Anschnitt
(7) Gießsystem, bestehen aus Einguss, Lauf und Anschnitt
(8) Gießpfanne
(9) Gießpfanne
(10) Gießpfanne
(11) Schicht
(12) Schicht

## Patentansprüche

1. Verfahren zur Herstellung einer Bremsscheibe, insbesondere als Achs- oder Radbremsscheibe für Schienenfahrzeuge mit einem aus einem Leichtmetall oder einer Leichtmetall-Legierung in einer Gießform (1) gegossenen Tragkörper, der ein- oder beidseitig eine ringförmige Schicht (11, 12) aus einem Keramikwerkstoff aufweist, die eine Reibfläche für eine Bremsbacke bildet, wobei aus dem Material der ringförmigen Schicht eine Einlage vorgefertigt wird, wobei als Trägermaterial eine duktile Al-Legierung verwendet wird, und als Schichtmaterial eine AlSi-Legierung mit partikelförmigen Verstärkungseinlagerungen oder eine übereutektische AlSi-Legierung verwendet werden, **dadurch gekennzeichnet, dass**
a) Einlagen aus einer mit einer Leichtmetall-Legierung gefüllten, offenporigen Schaumkeramik verwendet werden,
b) die Einlage in die Gießform eingelegt und dann mit der Schmelze des Tragkörpermaterials in Berührung kommenden Bereiche der Einlage so erwärmt werden, dass im Übergangsbereich der Materialien ein Gradientengefüge gebildet wird, wobei die Einlage auf eine Temperatur zwischen 100°C und der Liquidus-Temperatur und die Bereiche der Einlage auf eine Temperatur zwischen 200 und 500°C erwärmt werden und die Schmelzen im Sandgieß-, Niederdruck-, Gegendruck- oder Vakuumverfahren oder einer Kombination dieser Gießverfahren vergossen werden,
c) die Oberfläche der Einlage zumindest bereichsweise mit Vorsprüngen und/oder Ausnehmungen versehen ist und die Oberfläche der Einlage zumindest bereichsweise mit einer Beschichtung versehen wird, die bei Kontakt mit der Schmelze des Tragkörpermaterials eine exotherme Reaktion hervorruft und/oder das Benetzungsverfahren verbessert, und
d) die gegossenen Bremsscheiben anschließend einer Wärmebehandlung unterworfen werden.

## Claims

1. A method for producing a brake disc, more preferably as axle or wheel brake disc for rail vehicles, with a support body cast in a casting mould (1) from a light metal or a light metal alloy which on one or both sides comprises a ring-shaped layer (11, 12) of a ceramic material forming a friction surface for a brake shoe, wherein of the material of the ring-shaped layer an insert is prefabricated, wherein as carrier material a ductile Al-alloy is used and as layer material an AlSi-alloy with interbedded particulate reinforcement or an over-eutectic AlSi-alloy are used, **characterized in that**
a) inserts of an open-pore foam ceramic filled with a light-metal alloy are used,
b) the insert is placed in the casting mould and then the regions of the insert that come in contact with the melt of the support body material are so heated that a gradient structure is formed in the transition region of the materials, wherein the insert is heated to a temperature between 100°C and the liquidus temperature and the regions of the insert to a temperature between 200 and 500°C and the melts are cast by way of the sand casting, low pressure, top pressure or vacuum methods or a combination of these casting methods,
c) the surface of the insert at least in regions is provided with projections and/or clearances and the surface of the insert at least in regions is provided with a coating which upon contact with the melt of the support body material causes an exothermal reaction and/or improves the wetting method, and
d) the cast brake discs are subsequently subjected to heat treatment.

## Revendications

1. Procédé de fabrication d'un disque de frein, notamment sous forme d'un disque de frein d'essieu ou de roue pour véhicule ferroviaire, avec un corps support coulé dans un métal léger ou un alliage de métal léger dans un moule de fonderie (1), et qui présente sur un côté ou deux une couche de forme annulaire (11, 12) faite d'un matériau céramique constituant une surface de frottement pour une mâchoire du frein, une garniture étant préfabriquée dans la couche de forme annulaire, un alliage ductile étant utilisé comme matériau porteur et un alliage AlSi contenant des incrustations de renfort en forme de particules ou un alliage AlSi sur-eutectique étant utilisés comme matière feuilletée,
**caractérisé en ce que**
a) on utilise des garnitures en mousse de céramique à pores ouverts remplies d'un alliage de métal léger,
b) la garniture est posée dans le moule de fonderie, puis les zones de la garniture venant en contact avec la coulée de la matière de corps support étant chauffées de manière à ce qu'il se forme dans la zone de transition des matières un joint à gradient, la garniture étant chauffée à une température comprise entre 100° C et la température du liquide et les zones de la garniture à une température comprise entre 200 et 500° C et les coulées étant coulées par un procédé de coulée sur sable, à basse pression, à contre-pression ou sous vide ou une combinaison de ces procédés de fonderie,
c) la surface de la garniture est pourvue du moins par endroits de saillies et/ou d'évidements et la surface de la garniture est pourvue du moins par endroits d'un revêtement qui, en cas de contact avec la coulée de la matière de corps support, provoque une réaction exotherme et/ou améliore le procédé de réticulation, et
d) les disques de frein coulés sont ensuite soumis à un traitement thermique.
